(19) Europäisches Patentamt
European Patent Office
Office européen des brevets

(11) **EP 2 288 015 A1**

(12) **EUROPÄISCHE PATENTANMELDUNG**

(43) Veröffentlichungstag:
**23.02.2011 Patentblatt 2011/08**

(51) Int Cl.:
***H02P 7/288*** *(2006.01)*     ***F01P 7/04*** *(2006.01)*

(21) Anmeldenummer: **09168243.5**

(22) Anmeldetag: **20.08.2009**

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**AL BA RS**

(71) Anmelder: **Sitronic Ges. für elektrotechnische Ausrüstung mbH & Co. KG**
**71116 Gärtringen (DE)**

(72) Erfinder: **Zametzky, Klaus**
**91126, Schwabach (DE)**

(74) Vertreter: **Schmitt, Martin et al**
**Kohler Schmid Möbus**
**Patentanwälte**
**Ruppmannstrasse 27**
**70565 Stuttgart (DE)**

(54) **Gebläseregler mit Diagnosefunktion**

(57) Die Erfindung betrifft einen Gebläseregler (3) zur Regelung der Spannung ($U_{mot}$) über einem Gebläsemotor (8) eines Kraftfahrzeugs, umfassend: eine Spannungsregelschaltung (OP1, Rg, Rd) zur Regelung der Spannung ($U_{mot}$) über dem Gebläsemotor (8) in Abhängigkeit von einem Steuersignal ($I_S$), das dem Gebläseregler (3) an einem Steuereingang (11) über eine Signalleitung (9) zuführbar ist. Der Gebläseregler (3) ist ausgelegt, an dem Steuereingang (11) ein Diagnosesignal ($U_{diag}$) bereitzustellen, aus dem die über dem Gebläsemotor (8) abfallende Spannung ($U_{mot}$) bestimmt werden kann. Die Erfindung betrifft auch ein zugehöriges Steuergerät (2) sowie eine Anordnung (1) mit einem solchen Gebläseregler (3) und einem Steuergerät (2), die über eine Signalleitung (9) verbunden sind, über die sowohl das Steuersignal ($I_S$) als auch das Diagnosesignal ($U_{diag}$) übertragen wird.

**Fig. 2a**

**EP 2 288 015 A1**

**Beschreibung**

Die Erfindung betrifft einen Gebläseregler zur Regelung der Spannung über einem Gebläsemotor eines Kraftfahrzeugs, umfassend: eine Spannungsregelschaltung zur Regelung der Spannung über dem Gebläsemotor in Abhängigkeit von einem Steuersignal, das dem Gebläseregler an einem Steuereingang über eine Signalleitung zuführbar ist. Die Erfindung betrifft auch ein Steuergerät zur Erzeugung eines Steuersignals, das über eine Signalleitung dem Gebläseregler zuführbar ist, sowie eine Anordnung zur Regelung eines Gebläsemotors mit einem solchen Gebläseregler und einem solchen Steuergerät.

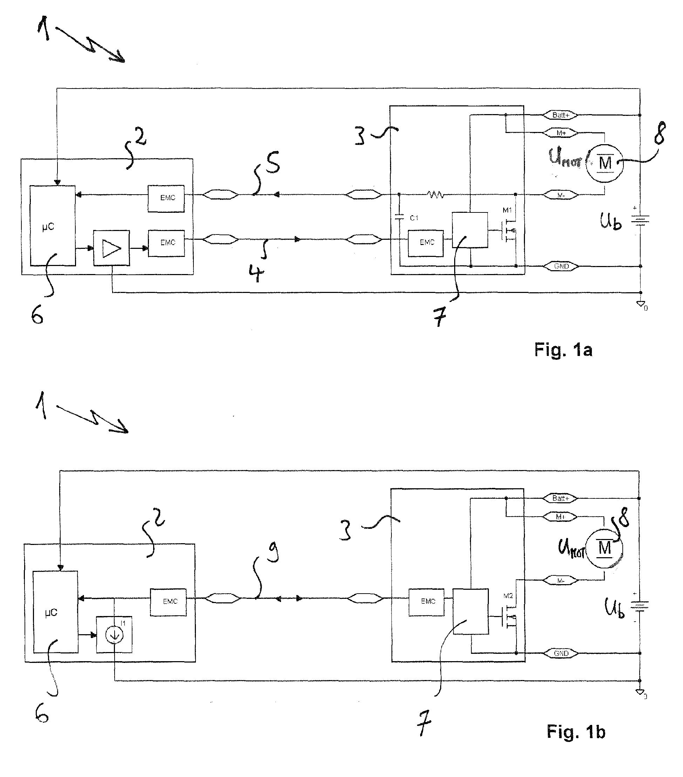

Für die Regelung der Spannung über einem Klimagebläsemotor in einem Kraftfahrzeug kann eine Anordnung **1** zum Einsatz kommen wie sie in **Fig. 1a** in einem Blockschaltbild dargestellt ist. Die Anordnung 1 umfasst ein Klimaanlagen-Steuergerät **2** und einen Gebläseregler **3,** die bei der gezeigten Anordnung 1 über zwei Signalleitungen **4, 5** miteinander verbunden sind. Ein in dem Steuergerät 2 angeordneter Mikrocontroller **6** dient der Erzeugung eines Steuersignals, das über die erste Signalleitung 4 an eine in dem Gebläseregler 3 vorgesehene Spannungsregelschaltung **7** übertragen wird. Die Spannungsregelschaltung 7 dient der Ansteuerung eines Leistungstransistors **M1,** um eine über einem Gebläsemotor **8** abfallende Motor-Spannung $U_{mot}$ in Abhängigkeit von dem Steuersignal zu regeln.

Die zweite Signalleitung 5 dient der Übertragung eines Diagnosesignals in Form eines am Motor-Minus-Kontakt anliegenden Potentials M- vom Gebläseregler 3 zum Steuergerät 2. Da sowohl dem Motor-Plus-Kontakt M+ als auch dem Mikrocontroller 6 des Steuergeräts 2 die Batterie-Spannung $U_b$ als Eingangssignal zugeführt wird, kann der Mikrocontroller 6 die Motorspannung $U_{mot}$ gemäß folgender Gleichung ermitteln: $U_{mot} = U_b - U_{M-}$. Anhand des über die auch als Diagnoseleitung bezeichnete zweite Signalleitung 5 übertragenen Diagnosesignals kann somit die über dem Gebläsemotor 8 abfallende Spannung $U_{mot}$ im Steuergerät 2 ermittelt werden und so Fehlerfälle wie Kurzschlüsse oder ein blockierter Gebläsemotor erkannt werden.

Bei der in Fig. 1a gezeigten Anordnung 1 werden für die Steuerung bzw. die Diagnose sowohl beim Gebläseregler 3 als auch beim Steuergerät 2 zwei Kontakte, zwei Signalleitungen im Kabelbaum, sowie Schutzschaltungen für beide Kontakte (Kurzschluss, Hochspannungsimpulse, Hochfrequenz, etc) benötigt.

Der Erfindung liegt die Aufgabe zugrunde, einen Gebläseregler, ein Steuergerät sowie eine Anordnung der eingangs genannten Art derart weiterzubilden, dass die Diagnose vereinfacht und damit kostengünstiger wird.

Diese Aufgabe wird gelöst durch einen Gebläseregler der eingangs genannten Art, der ausgelegt ist, an dem Steuereingang für die Signalleitung ein Diagnosesignal bereitzustellen, aus dem die über dem Gebläsemotor abfallende Spannung bestimmt werden kann.

Wie anhand einer in **Fig. 1b** gezeigten Anordnung 1 zu erkennen ist, kann hierdurch der Schaltungs- und Verdrahtungsaufwand wesentlich reduziert werden, da in der Anordnung 1 von Fig. 1b nur eine einzige Signalleitung **9** erforderlich ist, die sowohl der Übertragung des Steuersignals vom Steuergerät 2 zum Gebläseregler 3 als auch der Übertragung des Diagnosesignals vom Gebläseregler 3 zum Steuergerät 2 dient. Insbesondere ist auch der Bauteile-Aufwand hierbei geringer als bei der in Fig. 1a gezeigten Zweidraht-Lösung, da sowohl bei den Steckern, beim Kabelbaum, als auch bei der Elektronik jeweils Bauteile eingespart werden können.

Die in Fig. 1b gezeigte Anordnung 1 ist darüber hinaus auch zuverlässiger als die in Fig. 1a gezeigte Anordnung 1, da bei der Verwendung einer einzigen Signalleitung 9 nur zwei Kontakte an den Enden der Signalleitung 9 korrodieren können, während bei der in Fig. 1a gezeigten Anordnung gegebenenfalls vier Kontakte korrodieren. Die Verwendung einer einzigen Signalleitung an Stelle von zwei Signalleitungen ist bei der in Fig. 1a gezeigten Anordnung 1 nicht möglich, da das am Motor-Minus-Kontakt abfallende Potential M- nicht ohne Modifikationen am Eingang für das Steuersignal bereitgestellt werden kann.

In einer Ausführungsform des Gebläsereglers ist die Spannungsregelschaltung ausgelegt, die über dem Gebläsemotor abfallende Spannung so zu regeln, dass diese gleich groß ist wie eine Spannung, die über einem mit dem Steuereingang verbundenen Widerstand abfällt. In diesem Fall kann anhand der über dem mit dem Steuereingang verbundenen Widerstand abfallenden Spannung im Steuergerät die Motorspannung ermittelt werden, z.B. indem die zwischen der für die Signalleitung vorgesehenen Klemme des Steuergeräts und einem dem Gebläseregler und dem Steuergerät gemeinsamen (Masse-)potential abfallende Spannung ermittelt wird.

In einer vorteilhaften Ausführungsform stehen ein erster Eingang der Spannungsregelschaltung mit einem Spannungsabgriff am Gebläsemotor und ein zweiter Eingang der Spannungsregelschaltung mit dem Steuereingang mittelbar oder unmittelbar in Verbindung. Der erste und zweite Eingang der Spannungsregelschaltung können z.B. als invertierender bzw. als nicht-invertierender Steuereingang eines Operationsverstärkers ausgebildet sein, der einen Leistungstransistor so ansteuert, dass die Spannungen an beiden Eingängen des Operationsverstärkers gleich groß werden: Die Spannung an dem Spannungsabgriff (typischer Weise dem Minus-Potential des Motors) wird durch den Operationsverstärker so geregelt, dass diese der am Steuereingang anliegenden Spannung entspricht, sofern der zweite Eingang unmittelbar mit dem Steuereingang verbunden ist. Bei einer mittelbaren Verbindung zwischen dem zweitem Eingang und dem Steuereingang, z.B. über einen Spannungsteiler, liegt eine entsprechend dem Verhältnis der Spannungsteilung konvertierte Spannung am zweiten Eingang des Operationsverstärkers an.

Es versteht sich, dass die Verwendung eines Operationsverstärkers zur Spannungsregelung in der Spannungsregelschaltung nur beispielhaft ist und dass an Stelle eines Operationsverstärkers auch diskrete Bauteile zum Aufbau der Spannungsregelschaltung bzw. des gesamten Gebläsereglers verwendet werden können. Die Verwendung diskreter Bauteile hat den Vorteil, dass diese den hohen Anforderungen an die Temperaturbeständigkeit, die an einen Gebläseregler in einem Kraftfahrzeug gestellt werden, in der Regel besser gerecht werden.

In einer besonders vorteilhaften Weiterbildung ist der erste Eingang der Spannungsregelschaltung mit dem zweiten Eingang der Spannungsregelschaltung über einen weiteren Widerstand gekoppelt. Insbesondere bei der Verwendung der Steuereingänge eines Operationsverstärkers als Eingänge für die Spannungsregelschaltung fällt im Normalbetrieb, d.h. wenn kein Fehlerfall vorliegt, über dem weiteren Widerstand eine vernachlässigbar kleine Spannung ab. Im Fehlerfall, z.B. bei blockiertem Motor, fließt hingegen ein nicht zu vernachlässigender Strom durch den weiteren Widerstand. Diese Tatsache kann ausgenützt werden, um zwischen dem Normalbetrieb und einem Fehlerfall der Spannungsregelschaltung bzw. des Gebläsereglers im Steuergerät zu unterscheiden.

In einer weiteren Ausführungsform weist der Gebläseregler eine Strombegrenzerschaltung zur Begrenzung des Stroms durch den Gebläsemotor bei Überschreiten eines Stromschwellwerts auf. Die Strombegrenzerschaltung kann zu diesem Zweck die über einem zum Gebläsemotor in Reihe geschalteten Shunt-Widerstand abfallende Spannung mit einer Referenzspannung vergleichen, um den zur Steuerung des Gebläsemotors vorgesehenen Leistungstransistor, in der Regel einen Feldeffekttransistor, so anzusteuern, dass dessen Gate-Spannung einen maximalen Wert nicht überschreitet. In diesem Fall befindet sich die Spanungsregelschaltung in einem Sättigungszustand und kann die Spannung über dem Gebläsemotor nicht mehr in Abhängigkeit vom Steuersignal regeln.

In einer Weiterbildung unterscheidet sich die Eingangsimpedanz des Gebläsereglers beim Spannungsregelungsbetrieb mit der Spannungsregelschaltung von der Eingangsimpedanz beim Sättigungsbetrieb mit der Strombegrenzerschaltung. Die unterschiedliche Eingangsimpedanz kann im Steuergerät detektiert werden, um zwischen dem Normalbetrieb, bei der eine Spannungsregelung erfolgt, und dem Fehlerfall, bei dem eine Strombegrenzung stattfindet, zu unterscheiden. Die unterschiedliche Eingangsimpedanz kann insbesondere dadurch zu Stande kommen, dass in dem Widerstand zwischen den beiden Eingängen der Spannungsregelschaltung im Fehlerfall ein Strom fließt, während dies im Normalbetrieb nicht der Fall ist.

Die Erfindung ist auch verwirklicht in einem Steuergerät der eingangs genannten Art, das ausgelegt ist, über die Signalleitung ein Diagnosesignal von dem Gebläseregler zu empfangen und durch Auswerten des Diagnosesignals die über dem Gebläsemotor abfallende Spannung zu ermitteln. Das Steuergerät stellt somit an ein- und demselben Anschluss ein Steuersignal bereit und empfängt an diesem ein Diagnosesignal. Anhand des Diagnosesignals, das über dieselbe Signalleitung übertragen wird wie das Steuersignal, ermittelt das Steuergerät die Motorspannung. Als weitere Eingangsgröße wird hierbei in der Regel die Batteriespannung benötigt, die dem Gebläsemotor zugeführt wird und die auch dem Steuergerät bzw. einem im Steuergerät vorgesehenen Mikrocontroller zur Verfügung steht.

In einer Ausführungsform ist das Steuergerät ausgebildet, als Steuersignal einen Steuerstrom zu erzeugen und als Diagnosesignal eine Diagnosespannung auszuwerten. Alternativ kann das Steuergerät ausgebildet sein, als Steuersignal eine Steuerspannung zu erzeugen und als Diagnosesignal einen Diagnosestrom auszuwerten. Beide Fälle sind möglich und erlauben eine Übertragung sowohl des Steuersignals als auch des Diagnosesignals über eine einzige Signalleitung.

Ein weiterer Aspekt der Erfindung ist realisiert in einer Anordnung zur Regelung eines Gebläsemotors eines Kraftfahrzeugs, umfassend:

   einen Gebläseregler wie oben beschrieben zur Regelung der Spannung über dem Gebläsemotor in Abhängigkeit von einem Steuersignal, ein Steuergerät wie oben beschrieben zur Erzeugung eines Steuersignals, sowie eine Signalleitung für die Übertragung des Steuersignals vom Steuergerät zum Gebläseregler und für die Übertragung eines Diagnosesignals vom Gebläseregler zum Steuergerät, aus dem die über dem Gebläsemotor abfallende Spannung bestimmt werden kann. Die Anordnung kann in einem Kraftfahrzeug, insbesondere in einer Klimaanlage eines Kraftfahrzeugs integriert sein.

Ausführungsbeispiele sind in den schematischen Zeichnungen dargestellt und werden in der nachfolgenden Beschreibung erläutert. Es zeigen:

**Fig. 1a,b**   Blockschaltbilder einer Anordnung zur Regelung eines Gebläsemotors eines Kraftfahrzeugs mit getrennten Steuer- und Diagnoseleitungen (Fig. 1a), sowie mit einer Signalleitung, über die sowohl ein Steuer- als auch ein Diagnosesignal übertragen werden (Fig. 1b), und

**Fig. 2a,b**   Schaltbilder einer ersten und zweiten Ausführungsform einer Anordnung entsprechend Fig. 1b mit einem Stromsignal als Steuersignal und einem Spannungssignal als Diagnosesignal (Fig. 2a) bzw. mit einem Spannungssignal als Steuersignal und einem Stromsignal als Diagnosesignal (Fig. 2b).

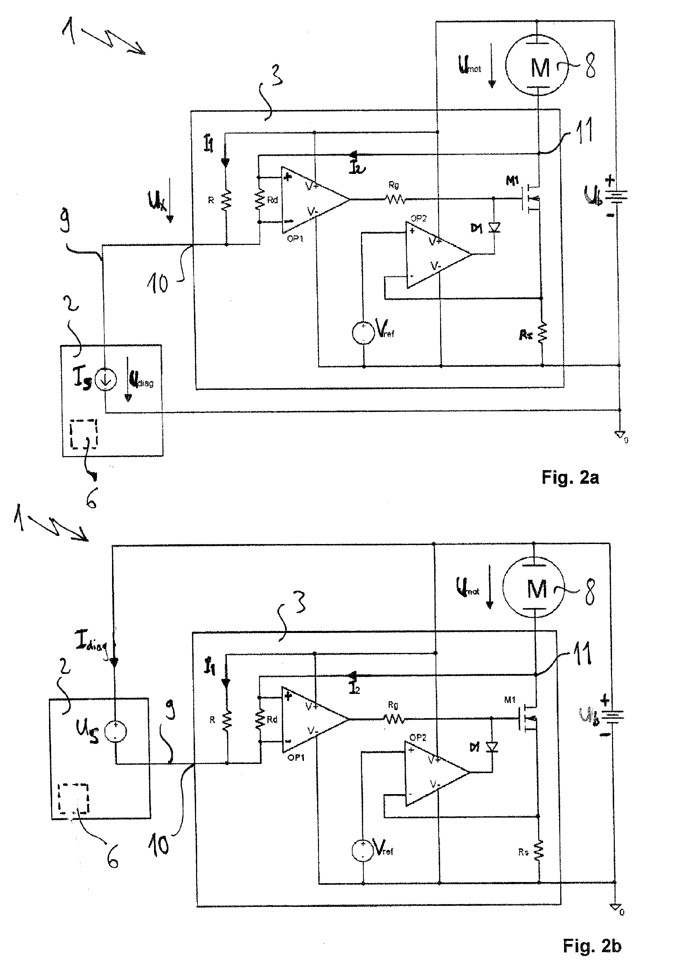

In **Fig. 2a** ist ein Stromlaufplan einer Ausführung der schematisch in Fig. 1b gezeigten Anordnung 1 dargestellt, bei welcher sowohl ein Steuer- als auch ein Diagnosesignal über ein- und dieselbe Signalleitung 9 übertragen werden. Als Steuersignal dient in diesem Fall ein Steuerstrom $I_s$, der in dem Steuergerät 2 erzeugt und über die Signalleitung 9 an den Gebläseregler 3 übertragen wird.

Der Gebläseregler 3 weist eine Spannungsregelschaltung mit einem ersten Operationsverstärker **OP1** auf, welcher zur Regelung einer Gate-Spannung an dem Leistungstransistor M1 (MOS-FET) dient. Zwischen dem Ausgang des ersten Operationsverstärkers OP1 und dem Leistungstransistor M1 ist hierbei ein Widerstand $R_g$ vorgesehen. Der Operationsverstärker OP1 regelt die Gate-Spannung des Leistungstransistors M1 im Normalbetrieb derart, dass die Spannungen an dessen invertierendem Eingang und an dessen nicht-invertierendem Eingang gleich groß werden, so dass an einem zwischen den Eingängen angeordneten, weiteren Widerstand **Rd** keine bzw. eine vernachlässigbar geringe Spannung abfällt und durch diesen nur ein vernachlässigbar kleiner Strom $I_2$ fließt. Da der invertierende Eingang des ersten Operationsverstärkers OP1 unmittelbar mit einem Steuereingang **10** der Signalleitung 9 und der invertierende Eingang mit einem Spannungsabgriff **11** (Minus-Pol des Gebläsemotors 8) in Verbindung stehen, fällt im Normalbetrieb über einem ohm'schen Widerstand **R** eine Spannung $U_x$ ab, die der Spannung $U_{mot}$ über dem Gebläsemotor 8 entspricht.

Im Normalbetrieb entspricht somit der Strom $I_1$ durch den unmittelbar mit dem Steuereingang 10 verbundenen Widerstand R dem Steuerstrom $I_s$, der vom Steuergerät 2 bereit gestellt wird, d.h. es gilt:

$$U_{mot} = I_S\, R.$$

Da dem Steuergerät 2 der Wert des von ihm selbst erzeugten Steuerstroms $I_S$ sowie der Wert des Widerstands R aus der Gebläsereglerspezifikation bekannt sind, kann das Steuergerät 2 die Motor-Spanung $U_{mot}$ im Normalbetrieb anhand obiger Gleichung berechnen.

Das Steuergerät 2 kann ferner den Normalbetrieb des Gebläsereglers 3, bei dem eine Spannungsregelung des Gebläsemotors 8 erfolgt, feststellen, indem dieses ein über die Signalleitung 9 übertragenes Diagnosesignal in Form einer Diagnosespannung $U_{diag}$ auswertet, da im Normalbetrieb in guter Näherung gilt:

$$U_{diag} = U_b - I_S\, R . \qquad\qquad (1)$$

Ein Fehlerfall, z.B. ein Kurzschluss oder ein blockierter Gebläsemotor 8, liegt bei der in Fig. 2 gezeigten Anordnung vor, wenn der durch den Gebläseregler 8 fließende Strom $I_{mot}$ einen Stromschwellwert überschreitet. Im vorliegenden Beispiel wird der Stromschwellwert überschritten, wenn die an einem zum Gebläsemotor 8 in Reihe geschalteten Shunt-Widerstand $R_s$ abfallende Spannung eine Referenz-Spannung $V_{ref}$ überschreitet. Die Referenz-Spannung $V_{ref}$ wird einem nicht-invertierenden Eingang eines zweiten Operationsvestärkers **OP2** zugeführt, an dessen invertierendem Eingang die Referenz-Spannung $V_{ref}$ anliegt. Der Operationsverstärker OP2 dient der Begrenzung der Gate-Spannung des Leistungstransistors M1 über eine an dessen Ausgang vorgesehene Diode **D1.** Die Anordnung aus zweitem Operationsverstärker OP2, Diode D1, Shunt-Widerstand $R_s$ und Referenz-Spannungsquelle $V_{ref}$ dient somit als Strombegrenzerschaltung.

Wie oben beschrieben überschreitet im Fehlerfall der Motorstrom $I_{mot}$ den Stromgrenzwert $V_{ref} / R_S$ und der zweite Operationsverstärker OP2 begrenzt die Gatespannung des Leistungstransistors M1. Der erste Operationsverstärker OP1 steuert in diesem Fall in einen Sättigungszustand und kann die Spannung $U_{mot}$ über dem Gebläsemotor 8 nicht mehr in Abhängigkeit vom Steuersignal $I_S$ regeln.

Wenn der erste Operationsverstärker OP1 die Spannung nicht mehr regelt, ist die Spannung zwischen dessen Eingängen von Null verschieden und es stellt sich ein signifikanter Stromfluss durch den die beiden Eingänge verbindenden, weiteren Widerstand Rd ein, d.h. der Strom $I_2$ wird signifikant größer Null und es gilt nicht mehr $U_{diag} = U_b - I_s * R$.

Durch Überprüfung der Bedingung $U_{diag} = U_b - I_s * R$ kann das Steuergerät 2, das in der Regel ohnehin einen Mikrocontroller 6 beinhaltet, leicht erkennen, ob der erste Operationsverstärker OP1 regelt und somit Normalbetrieb vorliegt, oder nicht.

Ist die Bedingung $U_{diag} = U_b - I_s * R$ nicht erfüllt, so regelt der erste Operationsverstärker OP1 nicht und ein Fehlerfall ist wahrscheinlich. Auch im Fehlerfall kann das Steuergerät 2 die Motorspannung $U_{mot}$ über folgende Beziehung berechnen:

$$Umot = (Ub - Udiag) \cdot \left(1 + \frac{Rd}{R}\right) - Is \cdot Rd \qquad (2)$$

Die Gleichung (2) wird für die in Fig. 2a gezeigte Anordnung weiter unten im Detail hergeleitet.

Die Ermittlung der Motorspannung $U_{mot}$ im Steuergerät 2 aufgrund der Gleichung (2) ist möglich, da dem Steuergerät 2 alle benötigten Größen bekannt sind: Die Batteriespannung $U_b$ ist dem Steuergerät 2 bekannt, da es wie der Gebläseregler 3, über die Batteriespannung $U_b$ gespeist wird; die Diagnosespannung $U_{diag}$ liegt am Steuergerät 2 an; den Steuerstrom $I_s$ stellt das Steuergerät selbst ein, und die Werte der Widerstände Rd und R entsprechen der Spezifikation des Gebläsereglers 3. Somit ist $U_{mot}$ auch beim Vorliegen eines Fehlers berechenbar, obwohl nur eine einzige Signalleitung 9 zwischen dem Steuergerät 2 und dem Gebläseregler 3 besteht.

Ein Überwachungsverfahren nach folgender Diagnosematrix erlaubt somit ein Erkennen von Fehlern:

| Diagnosematrix | | |
|---|---|---|
| wenn $Udiag = Ub - Is \cdot R$ ist, dann gilt: | Motorspannungsregelung, Fehlerfall ist unwahrscheinlich | $Umot = Is \cdot R$ |
| wenn $Udiag > Ub - Is \cdot R$ ist, dann gilt: | Motorstromregelung, Fehlerfall ist wahrscheinlich | $Umot = (Ub - Udiag) \cdot \left(1 + \frac{Rd}{R}\right) - Is \cdot Rd$ |

Der Ausdruck

$$\Delta Umot = Is \cdot (R + Rd) - (Ub - Udiag) \cdot \left(1 + \frac{Rd}{R}\right)$$

liefert hierbei sogar eine Information über die Art des Fehlers. Je größer $\Delta Umot$ ist, umso geringer ist die Motorimpedanz. Hieraus lässt sich ermitteln, ob ein schwergängiger Motor, ein blockierter Motor oder gar ein harter Kurzschluss vorliegt.

Der Stromlaufplan der Anordnung 1 von Fig. 2a belegt, dass dieses Überwachungsverfahren bereits mit einer Minimalschaltung möglich ist, also im Vergleich zu bekannten Lösungen mit zwei Signalleitungen keinen erweiterten Schaltungsaufwand erfordert. Das oben beschriebene Verfahren beruht u.a. darauf, dass einer der Eingänge des Spannungsregelkreises mit dem Motor-Minus-Potential bzw. dem entsprechenden Spannungsabgriff 11 in Verbindung steht. Diese Verbindung kann, wie in der Anordnung 1 von Fig. 2a gezeigt, unmittelbar, oder auch mittelbar, z.B. über einen Spannungsteiler erfolgen. Die Spannungsregelschaltung ist hierbei so auszugestalten, dass deren Eingangsimpedanz definiert von deren Arbeitszustand abhängt, wobei die möglichen Arbeitszustände Spannungsregelbetrieb und Sättigungsbetrieb sind.

Es versteht sich, dass der Stromlaufplan der in Fig. 2a gezeigten Ausführung der Anordnung 1 nur beispielhaft ist. Analog zur Stromsteuerung mit einem Steuerstrom Is kann man den Gebläseregler 3 z.B. auch durch eine Steuerspannung $U_s$ ansteuern, wie in Fig. 2b gezeigt ist. Die Steuerspannung $U_S$ ist in diesem Fall auf die Batterie-Spannung $U_b$ bezogen. Das Steuergerät 2 ist hierbei ausgelegt, auf eine zur obigen Darstellung analoge Weise den sich einstellenden Diagnosestrom $I_{diag}$ auszuwerten, um einen blockierten bzw. fehlerhaften Motor 8 zu erkennen und insbesondere die Motorspannung $U_{mot}$ in beiden Betriebszuständen (Spannungs- bzw. Sättigungsbetrieb) zu ermitteln.

Nachfolgend erfolgt die angekündigte Herleitung der oben angegebenen Gleichung (2) für das Beispiel der in Fig. 2a gezeigten Anordnung 1. Zur Schaltungsanordnung nach Stromlaufplan gemäß Fig. 2a können die Gleichungen (a) bis (d) gemäß folgender Tabelle aufgestellt werden:

Tabelle 1

| (a) | $Udiag = Ub - Ux$ |
|---|---|

(fortgesetzt)

| | |
|---|---|
| (b) | $I1 = \dfrac{Ux}{R}$ |
| (c) | $Ux = Umot + I2 \cdot Rd$ |
| (d) | $I2 = Is\text{-}I1$ |

Auf die in nachfolgender Tabelle (Tabelle 2) angegebene Weise lässt sich daraus die Motorspannung $U_{mot}$ bestimmen:

Tabelle 2

| | |
|---|---|
| (d) in (c) | $Ux = Umot + (Is\text{-}I1)\cdot Rd$ |
| mit (b) | $Ux = Umot + \left( Is - \dfrac{Ux}{R} \right) \cdot Rd$ |
| Klammer lösen | $Ux = Umot + Is \cdot Rd - Ux \cdot \dfrac{Rd}{R}$ |
| Auflösen nach Ux | $Ux \cdot \left( 1 + \dfrac{Rd}{R} \right) = Umot + Is \cdot Rd$ |
| Auflösen nach Ux | $Ux = \dfrac{Umot + Is \cdot Rd}{1 + \dfrac{Rd}{R}}$ |
| mit (a) | $Udiag = Ub - \dfrac{Umot + Is \cdot Rd}{1 + \dfrac{Rd}{R}}$ |
| Lösen des Bruchs | $Udiag \cdot \left( 1 + \dfrac{Rd}{R} \right) = Ub \cdot \left( 1 + \dfrac{Rd}{R} \right) - Umot + Is \cdot Rd$ |
| Auflösen nach Umot | $Umot = (Ub - Udiag) \cdot \left( 1 + \dfrac{Rd}{R} \right) - Is \cdot Rd$ |

Wie oben beschrieben kann somit bei der Anordnung 1 von Fig. 2a die Motorspannung $U_{mot}$ in beiden Betriebszuständen, d.h. sowohl im Regelungs- als auch im Sättigungsbetrieb anhand der Gleichungen (1) bzw. (2) ermittelt werden.

Zusammenfassend ist bei den in Fig. 1b sowie in Fign. 2a,b gezeigten Lösungen, welche nur eine einzige Signalleitung 9 benötigen, der Schaltungsaufwand wesentlich geringer als bei der in Fig. 1a gezeigten Lösung, bei der zwei separate Signalleitungen 4, 5 benötigt werden. Dies liegt unter anderem daran, dass bei den Lösungen mit einer einzigen Signalleitung 9 nur diese eine Signalleitung 9 eine hinreichende elektromagnetische Verträglichkeit aufweisen muss, d.h. vor Spannungsimpulsen geschützt und gefiltert werden muss, während bei der Lösung mit zwei Signalleitungen der hierzu erforderliche Aufwand doppelt so hoch ist.

**Patentansprüche**

1. Gebläseregler (3) zur Regelung der Spannung ($U_{mot}$) über einem Gebläsemotor (8) eines Kraftfahrzeugs, umfassend:

   eine Spannungsregelschaltung (OP1, Rd, Rg) zur Regelung der Spannung ($U_{mot}$) über dem Gebläsemotor (8) in Abhängigkeit von einem Steuersignal ($I_s$, $U_s$), das dem Gebläseregler (3) an einem Steuereingang (10) über eine Signalleitung (9) zuführbar ist,
   **dadurch gekennzeichnet,**
   **dass** der Gebläseregler (3) ausgelegt ist, an dem Steuereingang (10) ein Diagnosesignal ($U_{diag}$, $I_{diag}$) bereitzustellen, aus dem die über dem Gebläsemotor (8) abfallende Spannung ($U_{mot}$) bestimmt werden kann.

2. Gebläseregler nach Anspruch 1, bei dem die Spannungsregelschaltung (OP1, Rd, Rg) ausgelegt ist, die über dem Gebläsemotor (8) abfallende Spannung ($U_{mot}$) so zu regeln, dass diese gleich groß ist wie eine Spannung ($U_x$), die über einem mit dem Steuereingang (10) verbundenen Widerstand (R) abfällt.

3. Gebläseregler nach Anspruch 1 oder 2, bei der ein erster Eingang der Spannungsregelschaltung (OP1, Rd, Rg) mit einem Spannungsabgriff (11) am Gebläsemotor (8) und ein zweiter Eingang der Spannungsregelschaltung (OP1, Rd, Rg) mit dem Steuereingang (10) mittelbar oder unmittelbar in Verbindung steht.

4. Gebläseregler nach Anspruch 3, bei welcher der erste Eingang der Spannungsregelschaltung (OP1, Rd, Rg) mit dem zweiten Eingang der Spannungsregelschaltung (OP1, Rd, Rg) über einen weiteren Widerstand (Rd) gekoppelt ist.

5. Gebläseregler nach einem der vorhergehenden Ansprüche, der eine Strombegrenzerschaltung (OP2, D1, $V_{ref}$, Rs) zur Begrenzung des Stroms ($I_{mot}$) durch den Gebläsemotor (8) bei Überschreiten eines Stromschwellwerts ($V_{ref}/R_s$) aufweist.

6. Gebläseregler nach Anspruch 5, dessen Eingangsimpedanz beim Spannungsregelungsbetrieb mit der Spannungsregelschaltung (OP1, Rd, Rg) sich von der Eingangsimpedanz beim Sättigungsbetrieb mit der Strombegrenzerschaltung (OP2, D1, $V_{ref}$, Rs) unterscheidet.

7. Steuergerät (2) zur Erzeugung eines Steuersignals ($I_s$, $U_s$), das über eine Signalleitung (9) einem Gebläseregler (3) zuführbar ist, **dadurch gekennzeichnet,**
   **dass** das Steuergerät (2) ausgelegt ist, über die Signalleitung (9) ein Diagnosesignal ($U_{diag}$, $I_{diag}$) von dem Gebläseregler (3) zu empfangen und durch Auswerten des Diagnosesignals ($U_{diag}$, $I_{diag}$) die über dem Gebläsemotor (8) abfallende Spannung ($U_{mot}$) zu ermitteln.

8. Steuergerät nach Anspruch 7, welches ausgebildet ist, als Steuersignal einen Steuerstrom ($I_s$) zu erzeugen und als Diagnosesignal eine Diagnosespannung ($U_{diag}$) auszuwerten, oder als Steuersignal eine Steuerspannung ($U_s$) zu erzeugen und als Diagnosesignal einen Diagnosestrom ($I_{diag}$) auszuwerten.

9. Anordnung zur Regelung eines Gebläsemotors (8) eines Kraftfahrzeugs, umfassend:

   einen Gebläseregler (3) nach einem der Ansprüche 1 bis 6 zur Regelung der Spannung ($U_{mot}$) über dem Gebläsemotor (8) in Abhängigkeit von einem Steuersignal ($I_s$, $U_s$),
   ein Steuergerät (2) nach einem der Ansprüche 7 oder 8 zur Erzeugung des Steuersignals ($I_s$, $U_s$), sowie
   eine Signalleitung (9) für die Übertragung des Steuersignals ($I_s$, $U_s$) vom Steuergerät (2) zum Gebläseregler (3) und für die Übertragung eines Diagnosesignals ($U_{diag}$, $I_{diag}$), aus dem die über dem Gebläsemotor (8) abfallende Spannung ($U_{mot}$) bestimmt werden kann, vom Gebläseregler (3) zum Steuergerät (2).

Fig. 1a

Fig. 1b

**Fig. 2a**

**Fig. 2b**

Europäisches
Patentamt

European
Patent Office

Office européen
des brevets

# EUROPÄISCHER RECHERCHENBERICHT

Nummer der Anmeldung

EP 09 16 8243

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 5 718 373 A (KIM YONG-HO [KR] ET AL) 17. Februar 1998 (1998-02-17) * Spalte 1, Zeilen 22-50; Abbildung 1 * ----- | 1,3-4, 7-9 | INV. H02P7/288 F01P7/04 |
| A | JP 2005 080384 A (CALSONIC KANSEI CORP) 24. März 2005 (2005-03-24) * Absatz [0024] * * Absatz [0027] - Absatz [0029]; Abbildung 1 * * Absatz [0034] - Absatz [0036] * ----- | 1-9 | |
| A | US 5 418 676 A (MURAKAMI TAKASHI [JP] ET AL) 23. Mai 1995 (1995-05-23) * Spalte 8, Zeile 34 - Spalte 10, Zeile 27; Abbildungen 5,8 * ----- | 1-9 | |
| A | EP 1 406 377 A1 (SIEMENS VDO AUTOMOTIVE INC [CA]) 7. April 2004 (2004-04-07) * Absätze [0011] - [0015], [0020]; Abbildungen 1-3 * ----- | 1-9 | |

RECHERCHIERTE SACHGEBIETE (IPC)

H02P
F01P

Der vorliegende Recherchenbericht wurde für alle Patentansprüche erstellt

| Recherchenort | Abschlußdatum der Recherche | Prüfer |
|---|---|---|
| Den Haag | 1. März 2010 | Gusia, Sorin |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
..............................................................................
& : Mitglied der gleichen Patentfamilie, übereinstimmendes
   Dokument

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 09 16 8243

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

01-03-2010

| Im Recherchenbericht angeführtes Patentdokument | | Datum der Veröffentlichung | Mitglied(er) der Patentfamilie | | | Datum der Veröffentlichung |
|---|---|---|---|---|---|---|
| US 5718373 | A | 17-02-1998 | CN | 1143153 | A | 19-02-1997 |
| | | | JP | 3836902 | B2 | 25-10-2006 |
| | | | JP | 9053450 | A | 25-02-1997 |
| JP 2005080384 | A | 24-03-2005 | KEINE | | | |
| US 5418676 | A | 23-05-1995 | KEINE | | | |
| EP 1406377 | A1 | 07-04-2004 | US | 2004066156 | A1 | 08-04-2004 |
| | | | US | 2005077846 | A1 | 14-04-2005 |

EPO FORM P0461

Für nähere Einzelheiten zu diesem Anhang : siehe Amtsblatt des Europäischen Patentamts, Nr.12/82